# EUROPÄISCHE PATENTSCHRIFT

(11) **EP 4 669 556 B1**
(45) Veröffentlichungstag und Bekanntmachung des Hinweises auf die Patenterteilung: **15.04.2026**
(21) Anmeldenummer: 25716654.6
(22) Anmeldetag: 31.03.2025
(51) Int. Cl.: B60W 50/14, B60W 50/16, B60W 30/18

(54) **GESTEUERT UNKOMFORTABLES FAHRZEUG-VERHALTEN BEI FAHRASSISTENZSYSTEM-ANWENDUNG**
CONTROLLEDLY UNCOMFORTABLE VEHICLE BEHAVIOR IN DRIVER ASSISTANCE SYSTEM APPLICATION
COMPORTEMENT DE VÉHICULE INCONFORTABLE CONTRÔLÉ DANS UNE APPLICATION DE SYSTÈME D'AIDE À LA CONDUITE

(30) Priorität: 13.05.2024 DE 102024113284
(43) Veröffentlichungstag der Anmeldung: 31.12.2025
(73) Patentinhaber: Bayerische Motoren Werke Aktiengesellschaft, 80809 München (DE)
(72) Erfinder: KUNBERGER, Jan-Mark, 80995 München (DE); LECHNER, Andreas, 80807 München (DE); LECHNER, David, 94491 Hengersberg (DE); SCHWALBACH, Christian, 80801 München (DE); ROHRMUELLER, Florian, 84036 Landshut (DE); FELDHUETTER, Anna, 82327 Tutzing (DE); HANNIG, Gunter, 82256 Fürstenfeldbruck (DE); HUEMER, Jakob, 80804 München (DE)
(86) Internationale Anmeldenummer: PCT/EP2025/058774
(87) Internationale Veröffentlichungsnummer: WO 2025/237577

(56) Entgegenhaltungen:
- DE-A1- 102005 020 429
- DE-A1- 102014 214 389
- DE-A1- 102022 116 717
- US-A1- 2005 012 602
- US-A1- 2015 094 899

## Beschreibung

Die Erfindung betrifft ein Fahrerassistenzsystem zum Unterstützen eines Fahrers eines Fahrzeugs mit automatisierter Fahrzeugführung gemäß SAE Level 1 oder 2 in einer Vorfahrt-Gewähren Situation, sowie ein Verfahren zur Anwendung eines solchen Fahrerassistenzsystems.

Moderne Kraftfahrzeuge sind häufig zum automatisierten Fahren eingerichtet.

Unter dem Begriff "automatisiertes Fahren" bzw. automatisierter Fahrzeugführung wird im Rahmen des Dokuments Fahren mit automatisierter Längs- und/oder Querführung verstanden. Beim automatisierten Fahren kann es sich beispielsweise um ein zeitlich längeres Fahren auf der Autobahn oder um ein zeitlich begrenztes Fahren im Rahmen des Einparkens handeln. Der Begriff "automatisiertes Fahren" bzw. automatisierte Fahrzeugführung umfasst grundsätzlich automatisiertes Fahren mit einem beliebigen Automatisierungsgrad. Beispielhafte Automatisierungsgrade sind assistiertes, teilautomatisiertes, bedingt automatisiertes, hochautomatisiertes und vollautomatisiertes Fahren (mit jeweils zunehmendem Automatisierungsgrad). Die vorstehend genannten fünf Automatisierungsgrade entsprechen den SAE-Level 1 bis 5 der Norm SAE J3016 (SAE - Society of Automotive Engineering) gemäß dem Stand vom 30. April 2021. Beim assistierten Fahren (SAE-Level 1) führt das System die Längs- oder Querführung in bestimmten Fahrsituationen durch. Beim teilautomatisierten Fahren (SAE-Level 2) übernimmt das System die Längs- und Querführung in bestimmten Fahrsituationen, wobei der Fahrer das System wie beim assistierten Fahren dauerhaft überwachen muss. Beim bedingt automatisierten Fahren (SAE-Level 3) übernimmt das System die Längs- und Querführung in bestimmten Fahrsituationen, ohne dass der Fahrer das System dauerhaft überwachen muss; der Fahrer muss aber in einer gewissen Zeit in der Lage sein, die Fahrzeugführung auf Anforderung durch das System zu übernehmen. Beim hochautomatisierten Fahren (SAE-Level 4) übernimmt das System die Fahrzeugführung in bestimmten Fahrsituationen, selbst wenn der Fahrer auf eine Anforderung zum Eingreifen nicht reagiert, so dass der Fahrer als Rückfallebene entfällt. Beim vollautomatisierten Fahren (SAE-Level 5) können vom System alle Aspekte der dynamischen Fahraufgabe unter jeder Fahrbahn- und Umgebungsbedingung durchgeführt werden, welche auch von einem menschlichen Fahrer beherrscht werden.

In modernen assistierten und teilautomatisierten Fahrzeugen mit SAE Level 1 oder 2 kommen Fahrerassistenzsysteme zum Einsatz, die insbesondere dazu dienen, bereits bestehende kritische Situationen zu entschärfen bzw. die Entstehung von kritischen Situationen möglichst von vornherein zu verhindern. Unter anderem kann dabei eine Ansteuerung eines Bremsaktors zum Abbremsen des Fahrzeugs ausgeführt werden.

Die DE 10 2005 020 429 A1 betrifft in diesem Zusammenhang ein Verfahren zur Unterstützung des Fahrers beim Überqueren von Verkehrskreuzungen, wobei eine Einteilung von zu überquerenden Verkehrskreuzungen in mehrere Zonen erfolgt, welche Bereichen auf der Straße zugeordnet sind und wobei für die Zonen anhand von Umgebungsinformationen jeweils ein die Befahrbarkeit der Zone beschreibender situationsabhängiger Zustandswert bestimmt wird und auf der Basis dieser Zustandswerte sodann eine Fahrbewegung zum Überqueren der Verkehrskreuzung festgelegt wird. Es kann ferner vorgesehen werden, dass bei drohender Gefahr oder einfach zur Fahrerassistenz, Betätigungen des Gaspedals oder der Bremse verstärkt oder abgeschwächt eingesetzt oder unterstützt werden.

Die DE 19938691 A1 betrifft außerdem ein Verfahren zur verkehrsgeführten Beeinflussung und/oder Unterstützung von Kraftfahrzeugen, bzw. Kraftfahrzeugführern, wobei zur Erkennung einer allgemeinen, geschwindigkeitsreduzierten Stadtverkehrssituation, zur Erkennung örtlicher Gegebenheiten wie Kreuzung, Einmündung und rechts-vor-links Vorfahrtregel, sämtliche Objekte samt deren Relativgeschwindigkeit zum Fahrzeug mittels Abstandsmessung erfasst und die Daten nach Mustern im Sinne der oben genannten Verkehrssituation ausgewertet werden und die Daten zur Einflussnahme auf Beschleunigung und Verzögerung/Bremsung herangezogen werden.

Mit einer automatisierten Fahrzeugführung gemäß SAE Level 1 oder 2 kann demnach ein Fahrerassistenzsystem in einer Vorfahrt-Gewähren Situation für das eigene Fahrzeug gezielt in die Bremsaktorik eingreifen, um die Beachtung der Vorfahrt eines weiteren Verkehrsteilnehmers einzuhalten und unter Umständen damit eine Kollision mit dem weiteren Verkehrsteilnehmer zu verhindern. Typischerweise wird ein solcher Bremseingriff naturgemäß möglichst komfortabel ausgeführt, um ein generell komfortables Verhalten des Fahrzeugs zu erreichen. Durch eine solche komfortable Reaktion des Fahrerassistenzsystems auf vorfahrtsberechtigte Verkehrsteilnehmer wird jedoch dem Fahrer, der sich nach wie vor nur in einem Modus höchstens teilautomatisierter Fahrzeugführung befindet, ein hohes Maß an Automatisierung in Vorfahrt-Gewähren Situationen suggeriert. Dies kann zu übersteigertem Systemvertrauen seitens des Fahrers und damit zur Überschätzung der Fähigkeiten des Fahrerassistenzsystems führen.

Aufgabe der Erfindung ist es deshalb, ein Fahrerassistenzsystem für eine Vorfahrt-Gewähren Situation bereitzustellen, welches es vermeidet, dass sich ein Fahrer bei einer automatisierten Fahrzeugführung gemäß SAE Level 1 oder 2 zu sehr auf die Automatisierung verlässt.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Fahrerassistenzsystem zum Unterstützen eines Fahrers eines Fahrzeugs in einer Vorfahrt-Gewähren Situation während einer Fahrzeugführung mit SAE Level 1 oder 2, wobei das Fahrerassistenzsystem eine Sensorschnittstelle aufweist, die dazu ausgeführt ist, Sensorsignale über das Umfeld das Fahrzeugs an eine Steuereinheit des Fahrerassistenzsystems zu übermitteln, und wobei die Steuereinheit dazu ausgeführt ist, basierend auf den Sensorsignalen zu entscheiden, ob eine durch das Fahrerassistenzsystem ausgelöste Bremsung des Fahrzeugs zur Beachtung eines Vorfahrtsrechts eines weiteres Verkehrsteilnehmers notwendig ist, und beim Vorliegen einer Entscheidung zur Bremsung über eine Aktorschnittstelle des Fahrerassistenzsystems einen Befehl zum Durchführen einer Bremsung des Fahrzeugs auszugeben, dadurch gekennzeichnet, dass eine Rückmeldeeinheit des Fahrerassistenzsystems dazu ausgeführt ist, während der Bremsung eine Krafteinwirkung auf den Fahrer des Fahrzeugs als beabsichtigte Verminderung eines Fahrerkomforts zu bewirken.

In einer "Vorfahrt-Gewähren" Situation liegt durch eine lokale oder anderweitig durch Rechtsnormen bestimmte Regelung die Situation vor, dass das eigene Fahrzeug das Vorfahrtsrecht eines weiteren Verkehrsteilnehmers zu beachten hat. Beispielsweise an einer Kreuzung mit einer "rechts-vor-links"-Regelung, einer Kreuzung mit einem "Vorfahrt-Gewähren" Schild, auf einem Beschleunigungsstreifen in eine Schnellstraße oder Ähnlichem ist vom eigenen Fahrzeug anderen Verkehrsteilnehmern auf entsprechenden Straßenabschnitten Vorrang zu gewähren. Um den anderen Verkehrsteilnehmer nicht zu einer Bremsung oder zu einem Ausweichmanöver zu nötigen, oder schlimmstenfalls um eine Kollision zu vermeiden, ist unter Umständen eine Bremsung des eigenen Fahrzeugs notwendig. In einem solchen Fahrzeug, welches sich in assistierter oder teilautomatisierter Fahrzeugführung befindet, jedoch durch ein Fahrerassistenzsystem zur Erhöhung des Komforts und oder der Sicherheit unterstützt wird, wie in SAE Level 1 oder 2 der Fall, kann eine Bremsung durch das Fahrerassistenzsystem in einer solchen Vorfahrt-Gewähren Situation ausgelöst werden, um den Vorrang des jeweils weiteren Verkehrsteilnehmers zu berücksichtigen. Der Fahrer des Fahrzeugs sollte im Allgemeinen bei einem solchen Automatisierungsgrad die Bremsung jedoch zur Berücksichtigung des Vorrangs weiterer Verkehrsteilnehmer selbst auslösen, zumindest jedoch die durch das Fahrzeug selbst durchgeführte Bremsung überwachen, um bei einem Systemfehler eingreifen zu können. Bei Fahrzeugen mit maschineller Unterstützung in SAE Level 1 oder Level 2 liegt im Gegensatz zu Fahrzeugen mit SAE Level 3 und höher die Verantwortung über die Fahrt ständig beim menschlichen Fahrer. So können insbesondere in SAE Level 2 bereits Automatisierungen vorgesehen werden, die zumindest streckenweise die Führung des Fahrzeugs ausführen, dennoch sind diese Systeme nicht für den vollautomatischen und fahrerlosen Betrieb des Fahrzeugs ausgelegt, vielmehr ist damit zu rechnen, dass ein SAE Level 1 oder 2 System eine falsche Entscheidung treffen kann oder anderweitig versagen kann und der menschliche Fahrer entsprechend dazu in der Lage sein muss, einzugreifen.

Das Grundprinzip des Fahrerassistenzsystems ist es, von einem Sensor des Fahrzeugs an seiner Sensorschnittstelle erhaltene Sensorsignale in einer Steuereinheit zu verarbeiten, die mithilfe der Sensorsignale die Umgebungssituation analysiert und abhängig vom Ergebnis der Analyse eine Entscheidung trifft, ob eine Bremsung des Fahrzeugs durch das Fahrerassistenzsystem notwendig ist oder nicht. Die Bremsung, veranlasst durch das Fahrerassistenzsystem, bzw. der Anteil der Bremsung, welcher durch das Fahrerassistenzsystem veranlasst wird, wird durch Ansteuerung eines Bremsaktors des Fahrzeugs realisiert. Hierzu weist das Fahrerassistenzsystem eine Aktorschnittstelle auf, welche ein Aktorkommando auf Basis des von der Steuereinheit vorgegebenen zeitlichen Verlaufs der Bremsung an einen Bremsaktor übermittelt.

Eine solche Bremsung kann eine manuelle Bremsung überlagern, um durch die manuelle Bremsung des Fahrers und den Zusatz des Fahrassistenzsystems eine künstlich verstärkte Bremsung zu erhalten. Eine Bremsung in einer solchen Vorfahrt-gewähren Situation kann jedoch auch durch ein durch das Fahrerassistenzsystem alleinig erzeugtes Bremskommando verursacht werden, ohne einen manuellen Beitrag des Fahrers, insbesondere durch Betätigung eines Bremspedals des Fahrzeugs. Während beide Fälle dazu führen können, dass sich der Fahrer zu sehr auf das Fahrerassistenzsystem verlässt und diesem einen höheren Automatisierungsgrad als gedacht zuschreibt, ist im zweiten Fall zusätzlich die vollständige Reaktion auf die Vorfahrt-Gewähren Situation dem Fahrerassistenzsystem überlassen und erzeugt damit potenziell einen noch höheren Grad an Fehleinschätzung über den Automatisierungsgrad des Fahrzeugs beim Fahrer.

Um den Fahrer des Fahrzeugs darauf aufmerksam zu machen, dass er weiterhin in der Verantwortung der Beachtung der Vorfahrt anderer Verkehrsteilnehmer in einer solchen Situation steht, wird ein gezielt unkomfortables Rückmeldungs-Ereignis durch die Rückmeldeeinheit des Fahrerassistenzsystems erzeugt. Diese Rückmeldung kann einerseits durch einen akustischen Warnton unterstützt werden, und/oder visuell angezeigt werden, in jedem Fall aber ist sie für den Fahrer des Fahrzeugs durch eine speziell vorgesehene Krafteinwirkung spürbar.

Wird daher in assistierter oder teilautomatisierter Fahrzeugführung das Fahrerassistenzsystem zum Unterstützen der Einhaltung einer Vorfahrt eines anderen Verkehrsteilnehmers ausgeführt, wird dabei gezielt eine unkomfortable Rückmeldung wie eine unkomfortable Bremscharakteristik eingesetzt, welche eine Kollision mit anderen Verkehrsteilnehmern zwar verhindert, den Fahrer aber wegen des unkomfortablen Verhaltens nicht zu wiederholten Funktionsauslösungen animiert.

Zweck dessen ist, das Systemvertrauen des Fahrers bei der Reaktion auf vorfahrtsberechtigte Verkehrsteilnehmer bewusst zu moderieren. Ziel ist es, dem Fahrer seine Verantwortung bei der eigenverantwortlichen Fahrzeugführung permanent bewusst zu machen. Bei einer automatisierten Fahrzeugführung gemäß SAE Level 1 oder 2 liegt die Verantwortung zur Interpretation der Verkehrssituation und der Fahrentscheidungen, insbesondere über Weiterfahren oder Anhalten, primär beim Fahrer.

Eine Umsetzung des unkomfortablen Krafteinwirkens kann insbesondere über einen Gurtstraffer oder ein unkomfortables Bremsverhalten mit einem starken Ruckeinstieg (Verzögerungsgradient), und/oder durch ein hohes Verzögerungsniveau, und/oder mit mehreren Rucken im Verzögerungsverlauf dargestellt werden, um eine Begrenzung des Fahrersystemvertrauens in das Fahrerassistenzsystem zu ermöglichen.

Gemäß einer vorteilhaften Ausführungsform ist die Rückmeldeeinheit dazu ausgeführt, zur Erzeugung der Krafteinwirkung einen Gurtstraffer des Fahrzeugs zum unkomfortablen Straffen eines Sitzgurts des Fahrers anzusteuern.

Der Sitzgurt kann in einem vorgegebenen zeitlichen Muster entsprechend gestrafft werden, beispielsweise besonders schnell, ruckartig und/oder fest. Bevorzugt wird eine maximale zeitliche Änderung der Beschleunigung des Sitzgurts zu Beginn des Straffens eingesteuert, um durch das plötzliche Straffen unkomfortabel zu wirken und die Aufmerksamkeit des Fahrers zu erlangen.

Gemäß einer weiteren vorteilhaften Ausführungsform ist die Rückmeldeeinheit dazu ausgeführt, zur Erzeugung der Krafteinwirkung einen zeitlichen Verlauf einer Intensität der Bremsung mit einem vorgegebenen zeitlichen Muster einzustellen, um eine bewusst unkomfortable Bremsung zu erzeugen.

Besonders bevorzugt wird ein starker Verzögerungsgradient (Ruckeinstieg) und/oder ein hohes Verzögerungsniveau und/oder mehrere Rucke im Verzögerungsverlauf dargestellt. Somit wird ein Bremsmoment in einem entsprechend unkomfortablen zeitlichen Verlauf vorgegeben, alternativ wird ein zeitlicher Beschleunigungsverlauf so vorgegeben, dass dieser besonders unkomfortabel auf den Fahrer des Fahrzeugs wirkt. Mit dem zeitlichen Beschleunigungsverlauf können auch ein oder mehrere Rucke entsprechend vorgegeben werden. Ein Ruck beschreibt die zeitliche Ableitung der Beschleunigung. Da die Beschleunigung zu einer verminderten Geschwindigkeit führt, wird sie auch Verzögerung des Fahrzeugs genannt. Insbesondere ein Verlauf einer zeitlichen Beschleunigung mit einer höheren Leistungsspektraldichte, d. h. Ausschlägen zu höheren und geringeren Beschleunigungen, wird typischerweise als unkomfortabler empfunden, als ein glatter zeitlicher Verlauf der Beschleunigung. Wird die Beschleunigung bei der Bremsung bzw. das Bremsmoment langsamer aufgebaut, so kann sich der menschliche Körper leichter darauf einstellen, bei einer plötzlichen Einstellung einer Verzögerung bzw. eines Bremsmoments weniger, und wird daher als unkomfortabler empfunden.

Gemäß einer weiteren vorteilhaften Ausführungsform ist der zeitliche Verlauf der Intensität der Bremsung durch einen vorgegebenen zeitlichen Verlauf jeweils eines Soll-Bremsmoments, einer Soll-Fahrzeugverzögerung oder einer zeitlichen Ableitung der Soll-Fahrzeugverzögerung bestimmt, die jeweils nach einem als unkomfortabel bestimmten zeitlichen Muster vorgegeben sind.

Der zeitliche Verlauf einer Beschleunigung, des Bremsmoments, oder der zeitlichen Ableitung der Beschleunigung wird in einem jeweiligen Muster festgelegt, welches vorgegeben ist und bevorzugt in der Steuereinheit gespeichert ist.

Gemäß einer weiteren vorteilhaften Ausführungsform weist der zeitliche Verlauf der Intensität der Bremsung zumindest zwei Spitzen in der zeitlichen Ableitung der Soll-Fahrzeugverzögerung auf.

Die Spitzen im zeitlichen Verlauf der Ableitung der Beschleunigung bedeuten, dass ein Bremsmoment bzw. eine Beschleunigung des Fahrzeugs während der Bremsung durch eine Erhöhung gefolgt von einer Verminderung, oder eine mehrfache Folge von Erhöhungen in Abwechslung mit Verminderungen, oder jeweils umgekehrt, einer regulär glatten, insbesondere konstanten, Verzögerung bzw. einem konstanten Bremsmoment überlagert werden.

Bevorzugt wird der zeitliche Verlauf der Ableitung der Beschleunigung so gewählt, dass möglichst eine geschätzte oder vorab gespeicherte oder aktuell ermittelte Resonanzfrequenz im menschlichen Körper angeregt wird, um maximal unkomfortabel zu wirken.

Gemäß einer weiteren vorteilhaften Ausführungsform weist der zeitliche Verlauf der Intensität der Bremsung eine Soll-Fahrzeugverzögerung oder ein Soll-Bremsmoment oberhalb eines vorgegebenen Schwellwerts auf, um eine unkomfortabel starke Bremsung auszuführen.

Der jeweilige Schwellwert für die Soll-Fahrzeugverzögerung bzw. das Soll-Bremsmoment ist dabei so hoch gewählt, dass die Bremsung für den Fahrer des Fahrzeugs als unangenehm empfunden wird, zumindest solange er nicht selbst das Bremspedal gleichwertig betätigt. Die maschinelle Bremsung wird tendenziell als unangenehmer empfunden als die selbst durchgeführte.

Gemäß einer weiteren vorteilhaften Ausführungsform weist der zeitliche Verlauf der Intensität der Bremsung zu Beginn der Bremsung eine zeitliche Ableitung der Soll-Fahrzeugverzögerung oberhalb eines vorgegebenen Schwellwerts auf, insbesondere eine am Fahrzeug maximal mögliche zeitliche Ableitung der Soll-Fahrzeugverzögerung.

Eine hohe zeitliche Ableitung der Soll-Fahrzeugverzögerung bedeutet ein sehr plötzliches Einnehmen des Fahrzeugs einer bestimmten Verzögerung bzw. eines vorgegebenen Bremsmoments, und überrascht typischerweise den Fahrer eher als ein geglätteter Verlauf, wenn beispielsweise das Bremsmoment bzw. die gewünschte maximale Fahrzeugverzögerung durch eine Rampe oder ein System höherer Ordnung wie ein PT1 Glied oder PT2 Glied langsam eingestellt wird.

Gemäß einer weiteren vorteilhaften Ausführungsform ist die Steuereinheit dazu ausgeführt, die Zahl der durch das Fahrerassistenzsystem ausgelösten Bremsungen zu einem Summenwert zu kumulieren, und bei Überschreitung des Summenwerts über eine vorgegebene Grenze eine zukünftige Auslösung der Bremsung durch das Fahrerassistenzsystem in einer Vorfahrt-Gewähren Situation zu sperren.

Dies ist eine weitere Maßnahme zur Moderation der Funktionsnutzung. Hierbei kann eine Sperrung der Funktion der automatischen Bremsung im Falle häufiger Funktionsauslösungen vorgenommen werden, um eine falsche Einschätzung des Fahrers über den Automatisierungsgrad zu verhindern, insbesondere die Gefahr, eine automatische Fahrzeugführung mit SAE Level 3 oder höher anzunehmen, zu vermindern. Die Sperrung der Funktion kann mittels eines Zählers umgesetzt werden, der bei jeder Funktionsauslösung um Eins inkrementiert wird. Sobald ein festgelegter Schwellwert überschritten wird, wird die Funktion gesperrt. Die Sperrung kann dem Fahrer durch eine geeignete Anzeige angekündigt und vermittelt werden (z.B. Anzahl der noch tolerierten Auslösungen). Bevorzugt kann die Sperrung durch einen Neustart des Fahrzeugs oder fahrerprofilgebunden aufgehoben werden. Bei einer fahrerprofilgebundenen Erfassung kann der individuelle Moderationsbedarf des Fahrers berücksichtigt werden.

Gemäß einer weiteren vorteilhaften Ausführungsform weist das Fahrerassistenzsystem weiterhin eine Überwachungseinheit auf, die zum Ausführen einer Überwachung des Bremsverhaltens ausgeführt ist, und bei einer Zahl der Abweichungen zwischen einer Soll-Größe von einer Ist-Größe bezogen auf die Bremsung oberhalb einer vorgegebenen Grenzbedingung ein Warnsignal ausgibt.

Hierbei wertet eine Überwachungsfunktion die tatsächliche Bremscharakteristik im Fahrzeug permanent aus, um Abweichungen (z.B. bei hohem Fahrzeuggewicht oder schwacher Bremsanlage) zu detektieren und z.B. für Qualitätsverbesserungen über ein Backend an den Hersteller zu melden, bzw. im Falle von Sicherheitsrisiken die Funktion temporär oder permanent zu sperren, oder den Kunden entsprechend darauf hinzuweisen. Die Überwachungsfunktion der Bremscharakteristik kann über Ziel-Kennfelder (also Wertebereiche) umgesetzt werden. Bei jeder Auslösung einer Bremsung durch das Fahrerassistenzsystem wird geprüft, ob die gemessenen Kenngrößen der Fahrzeugdynamik die Kriterien der Ziel-Kennfelder erfüllen. Bei Abweichungen werden entsprechend ebenfalls Zähler hochgezählt. Bei Überschreitung festgelegter maximal zulässiger Grenzwerte werden Maßnahmen eingeleitet.

Ein weiterer Aspekt der Erfindung betrifft ein Fahrzeug mit einem Fahrerassistenzsystem wie oben und im Folgenden beschrieben.

Vorteile und bevorzugte Weiterbildungen des vorgeschlagenen Fahrzeugs ergeben sich durch eine analoge und sinngemäße Übertragung der im Zusammenhang mit dem vorgeschlagenen Fahrerassistenzsystem vorstehend gemachten Ausführungen.

Ein weiterer Aspekt der Erfindung betrifft ein Verfahren zum Unterstützen eines Fahrers eines Fahrzeugs in einer Vorfahrt-Gewähren Situation während einer Fahrzeugführung mit SAE Level 1 oder 2, wobei von einer Sensorschnittstelle des Fahrerassistenzsystems Sensorsignale über das Umfeld das Fahrzeugs an eine Steuereinheit des Fahrerassistenzsystems übermittelt werden, und wobei die Steuereinheit basierend auf den Sensorsignalen entscheidet, ob eine durch das Fahrerassistenzsystem ausgelöste Bremsung des Fahrzeugs zur Beachtung eines Vorfahrtsrechts eines weiteren Verkehrsteilnehmers notwendig ist, und beim Vorliegen einer Entscheidung zur Bremsung über eine Aktorschnittstelle des Fahrerassistenzsystems einen Befehl zum Durchführen einer Bremsung des Fahrzeugs ausgibt, wobei eine Rückmeldeeinheit des Fahrerassistenzsystems während der Bremsung eine Krafteinwirkung auf den Fahrer des Fahrzeugs als beabsichtigte Verminderung eines Fahrerkomforts bewirkt.

Vorteile und bevorzugte Weiterbildungen des vorgeschlagenen Verfahrens ergeben sich durch eine analoge und sinngemäße Übertragung der im Zusammenhang mit dem vorgeschlagenen Fahrerassistenzsystem vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist.

Es zeigen:
- Fig. 1:: Ein Fahrzeug mit einem Fahrerassistenzsystem gemäß einem Ausführungsbeispiel der Erfindung.
- Fig. 2:: Eine Situation zur Anwendung des Fahrerassistenzsystems gemäß einem Ausführungsbeispiel der Erfindung.
- Fig. 3:: Ein Verfahren zum Unterstützen eines Fahrers eines Fahrzeugs in einer Vorfahrt-Gewähren Situation gemäß einem Ausführungsbeispiel der Erfindung.

Die Darstellungen in den Figuren sind schematisch und nicht maßstäblich.

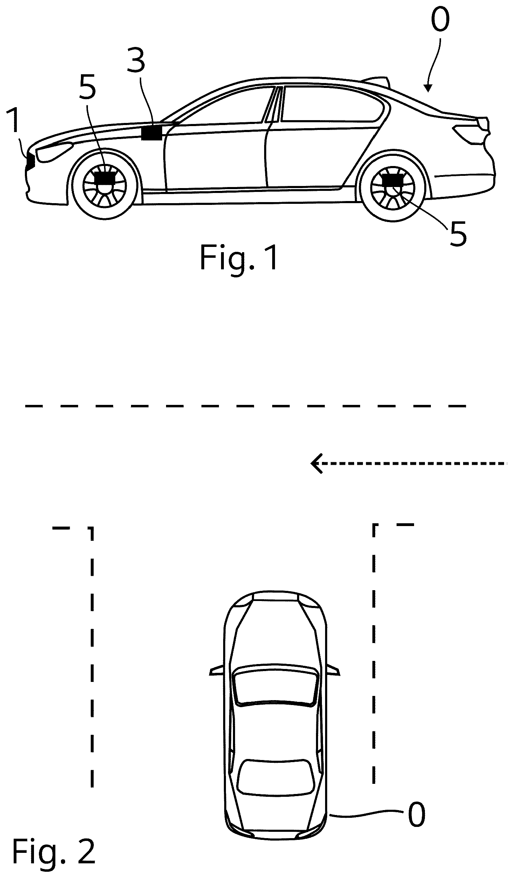

Fig. 1 zeigt ein Fahrzeug 0 mit einem Fahrerassistenzsystem SAE Level 1 oder 2 zum Unterstützen eines Fahrers des Fahrzeugs 0 bei seiner Fahrzeugführung, wenn eine Vorfahrt-Gewähren Situation erreicht wird. Eine solche Situation ist beispielhaft in der Fig. 2 dargestellt, die für das Verständnis des im folgenden beschriebenen Fahrerassistenzsystems entsprechend herangezogen werden kann. Das Fahrerassistenzsystem weist eine Sensorschnittstelle 1 auf, um Sensordaten einer Sensoreinheit des Fahrzeugs 0 zu erhalten. Eine Sensoreinheit, beispielsweise eine Kameraeinheit des Fahrzeugs 0, überwacht typischerweise laufend das Umfeld des Fahrzeugs 0. Diese Sensorsignale über das Umfeld werden in der Steuereinheit 3 des Fahrzeugs 0 interpretiert und es wird dadurch erkannt, ob eine Vorfahrt-Beachten Situation voraus liegt. Dies kann beispielsweise durch Verkehrszeichenerkennung erfolgen, mithilfe digitaler Karten, und weiteren anwendbaren im Stand der Technik bekannten Methoden. Von der Steuereinheit 3 wird ferner entschieden, ob eine durch das Fahrerassistenzsystem ausgelöste Bremsung des Fahrzeugs 0 zur Beachtung eines Vorfahrtsrechts eines weiteren Verkehrsteilnehmers notwendig ist, um beispielsweise eine Kollision mit dem weiteren Verkehrsteilnehmer mit Vorfahrtsrecht zu verhindern. Hierbei besteht die Gefahr, dass der menschliche Fahrer bei zu häufiger automatischer Auslösung einer solchen Bremsung sich zunehmend auf das Fahrerassistenzsystem verlässt und fälschlicherweise davon ausgeht, dass er in solchen Situationen nicht die Verantwortung trägt. Tatsächlich ist es bei einem solchen Fahrerassistenzsystem mit SAE Level 2 jedoch notwendig, dass der Fahrer grundsätzlich die Entscheidungen trägt und ausführt, er trägt die Verantwortung über die Fahrzeugführung. Das Fahrerassistenzsystem dient lediglich als Sicherheitssystem in einer Vorfahrt-Gewähren Situation, um Fehler in der menschlichen Fahrzeugführung zu mitigieren und eine Kollision zu verhindern. Wird eine solche Bremsung durch die Steuereinheit 3 angestrebt, sendet sie ein entsprechendes Aktorkommando über eine Aktorschnittstelle 5 an einen jeweiligen Bremsaktor. Ein solcher Bremsaktor mit dazugehörigen Aktorschnittstelle 5 ist in der Fig. 1 beispielhaft an den Vorderrädern und den Hinterrädern des Fahrzeugs 0 vorgesehen. Um die oben genannte Gefahr zu verhindern, dass der menschliche Fahrer zunehmend die Verantwortung beim Fahrzeug 0 für die sichere Fahrzeugführung sieht, wird durch eine Rückmeldeeinheit des Fahrerassistenzsystems eine für den Fahrer spürbare Krafteinwirkung erzeugt. Während dies durch Aktoren im oder am Sitz, wie beispielsweise einem Gurtstraffer, erzeugt werden kann, ist auch eine durch ein bestimmtes Bremsverhalten einwirkende Kraft auf den Fahrer eine entsprechende Kraftwirkung. Während grundsätzlich bei jeder Bremsung durch die Geschwindigkeitsänderung der Masse des Fahrers auf diesen eine Kraft wirkt, kann durch ein bewusst unkomfortabel ausgewähltes Muster im zeitlichen Verlauf der Bremsung eine besondere Krafteinwirkung auf den Fahrer erzeugt werden, die für diesen als unkomfortabel wahrgenommen wird. Im Vergleich zu einem geglätteten Verlauf einer Beschleunigung über die Zeit, weist hierbei die Beschleunigung des Fahrzeugs 0, erwirkt durch ein entsprechendes Bremsmoment, einen möglichst ruppigen Verlauf auf. Ein solcher Verlauf kann durch plötzliche Einnahme einer Soll-Beschleunigung im Sinne einer Verzögerung des Fahrzeugs 0 zu niedrigeren Geschwindigkeiten und/oder durch Ausprägungen von Spitzen und Senken im zeitlichen Verlauf der Beschleunigung des Fahrzeugs 0 erwirkt werden. Der gewünschte Verlauf der Beschleunigung des Fahrzeugs 0 wird vorteilhaft durch einen Regler eingestellt, wobei das Bremsmoment die Stellgröße bildet. Unterstützt werden kann der Regler durch einen Masseschätzer, wenn vorhanden. Es kann außerdem vorgesehen werden, dass bei zu häufigem Einsatz der automatischen Bremsung durch das Fahrerassistenzsystem, insbesondere bei gänzlich fehlendem Betätigen des Bremspedals durch den Fahrer, die Funktion gesperrt wird; der Fahrer wird zweckmäßig davon in Kenntnis gesetzt, um seine Aufmerksamkeit über den Zusammenhang weiter zu gewinnen.

Fig. 2 zeigt eine beispielhafte Situation, in der das Fahrerassistenzsystem wie unter Fig. 1 beschrieben angewendet wird. Hierbei nähert sich das eigene Fahrzeug 0 an eine Kreuzung an, an der selbst kein Verkehrszeichen angebracht ist, und welches durch kein anderes Verkehrszeichen von einer lokalen Vorfahrtsregelung betroffen ist. Es gilt hiermit die häufig in vielen Rechtssystemen anzutreffende Regelung "Rechts vor Links", sodass ein von rechts aus Sicht des eigenen Fahrzeugs 0 ankommender weiterer Verkehrsteilnehmer Vorfahrtsrecht genießt, das eigene Fahrzeug 0 hat entsprechend zu bremsen bzw. anzuhalten.

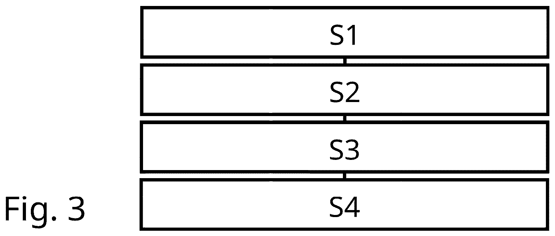

Fig. 3 zeigt ein Verfahren zum Unterstützen eines Fahrers eines Fahrzeugs 0 in einer Vorfahrt-Gewähren Situation während einer Fahrzeugführung mit SAE Level 1 oder 2, wobei von einer Sensorschnittstelle 1 des Fahrerassistenzsystems Sensorsignale über das Umfeld das Fahrzeugs 0 an eine Steuereinheit 3 des Fahrerassistenzsystems übermittelt werden S1, und wobei die Steuereinheit 3 basierend auf den Sensorsignalen entscheidet S2, ob eine durch das Fahrerassistenzsystem ausgelöste Bremsung des Fahrzeugs 0 zur Beachtung eines Vorfahrtsrechts eines weiteren Verkehrsteilnehmers notwendig ist, und beim Vorliegen einer Entscheidung zur Bremsung über eine Aktorschnittstelle 5 des Fahrerassistenzsystems einen Befehl zum Durchführen einer Bremsung des Fahrzeugs 0 ausgibt S3, dadurch gekennzeichnet, dass eine Rückmeldeeinheit des Fahrerassistenzsystems während der Bremsung eine Krafteinwirkung auf den Fahrer des Fahrzeugs 0 als beabsichtigte Verminderung eines Fahrerkomforts bewirkt S4.

## Patentansprüche

1. Fahrerassistenzsystem zum Unterstützen eines Fahrers eines Fahrzeugs (0) mit automatisierter Fahrzeugführung gemäß SAE Level 1 oder 2 in einer Vorfahrt-Gewähren Situation, wobei das Fahrerassistenzsystem eine Sensorschnittstelle (1) aufweist, die dazu ausgeführt ist, Sensorsignale über das Umfeld das Fahrzeugs (0) an eine Steuereinheit (3) des Fahrerassistenzsystems zu übermitteln, und wobei die Steuereinheit (3) dazu ausgeführt ist, basierend auf den Sensorsignalen zu entscheiden, ob eine durch das Fahrerassistenzsystem ausgelöste Bremsung des Fahrzeugs (0) zur Beachtung eines Vorfahrtsrechts eines weiteren Verkehrsteilnehmers notwendig ist, und beim Vorliegen einer Entscheidung zur Bremsung über eine Aktorschnittstelle (5) des Fahrerassistenzsystems einen Befehl zum Durchführen einer Bremsung des Fahrzeugs (0) auszugeben, **dadurch gekennzeichnet, dass** eine Rückmeldeeinheit des Fahrerassistenzsystems dazu ausgeführt ist, während der Bremsung eine Krafteinwirkung auf den Fahrer des Fahrzeugs (0) als beabsichtigte Verminderung eines Fahrerkomforts zu bewirken.

2. Fahrerassistenzsystem nach Anspruch 1,
wobei die Rückmeldeeinheit dazu ausgeführt ist, zur Erzeugung der Krafteinwirkung einen Gurtstraffer des Fahrzeugs (0) zum unkomfortablen Straffen eines Sitzgurts des Fahrers anzusteuern.

3. Fahrerassistenzsystem nach einem der vorhergehenden Ansprüche,
wobei die Rückmeldeeinheit dazu ausgeführt ist, zur Erzeugung der Krafteinwirkung einen zeitlichen Verlauf einer Intensität der Bremsung mit einem vorgegebenen zeitlichen Muster einzustellen, um eine bewusst unkomfortable Bremsung zu erzeugen.

4. Fahrerassistenzsystem nach Anspruch 3,
wobei der zeitliche Verlauf der Intensität der Bremsung durch einen vorgegebenen zeitlichen Verlauf jeweils eines Soll-Bremsmoments, einer Soll-Fahrzeugverzögerung oder einer zeitlichen Ableitung der Soll-Fahrzeugverzögerung bestimmt ist, die jeweils nach einem als unkomfortabel bestimmten zeitlichen Muster vorgegeben sind.

5. Fahrerassistenzsystem nach Anspruch 4,
wobei der zeitliche Verlauf der Intensität der Bremsung zumindest zwei Spitzen in der zeitlichen Ableitung der Soll-Fahrzeugverzögerung aufweist.

6. Fahrerassistenzsystem nach einem der Ansprüche 4 bis 5,
wobei der zeitliche Verlauf der Intensität der Bremsung eine Soll-Fahrzeugverzögerung oder ein Soll-Bremsmoment oberhalb eines vorgegebenen Schwellwerts aufweist, um eine unkomfortabel starke Bremsung auszuführen.

7. Fahrerassistenzsystem nach einem der Ansprüche 4 bis 6,
wobei der zeitliche Verlauf der Intensität der Bremsung zu Beginn oder am Ende der Bremsung eine zeitliche Ableitung der Soll-Fahrzeugverzögerung oberhalb eines vorgegebenen Schwellwerts aufweist, insbesondere eine am Fahrzeug (0) maximal mögliche zeitliche Ableitung der Soll-Fahrzeugverzögerung.

8. Fahrerassistenzsystem nach einem der vorhergehenden Ansprüche,
wobei die Steuereinheit (3) dazu ausgeführt ist, die Zahl der durch das Fahrerassistenzsystem ausgelösten Bremsungen zu einem Summenwert zu kumulieren, und bei Überschreitung des Summenwerts über eine vorgegebene Grenze eine zukünftige Auslösung der Bremsung durch das Fahrerassistenzsystem in einer Vorfahrt-Gewähren Situation zu sperren.

9. Fahrerassistenzsystem nach einem der vorhergehenden Ansprüche, aufweisend eine Überwachungseinheit, die zum Ausführen einer Überwachung des Bremsverhaltens ausgeführt ist, und dazu, bei einer Zahl der Abweichungen zwischen einer Soll-Größe von einer Ist-Größe bezogen auf die Bremsung oberhalb einer vorgegebenen Grenzbedingung ein Warnsignal auszugeben.

10. Verfahren zum Unterstützen eines Fahrers eines Fahrzeugs (0) in einer Vorfahrt-Gewähren Situation während einer Fahrzeugführung mit SAE Level 1 oder 2, wobei von einer Sensorschnittstelle (1) des Fahrerassistenzsystems Sensorsignale über das Umfeld das Fahrzeugs (0) an eine Steuereinheit (3) des Fahrerassistenzsystems übermittelt werden (S1), und wobei die Steuereinheit (3) basierend auf den Sensorsignalen entscheidet (S2), ob eine durch das Fahrerassistenzsystem ausgelöste Bremsung des Fahrzeugs (0) zur Beachtung eines Vorfahrtsrechts eines weiteren Verkehrsteilnehmers notwendig ist, und beim Vorliegen einer Entscheidung zur Bremsung über eine Aktorschnittstelle (5) des Fahrerassistenzsystems einen Befehl zum Durchführen einer Bremsung des Fahrzeugs (0) ausgibt (S3), **dadurch gekennzeichnet, dass** eine Rückmeldeeinheit des Fahrerassistenzsystems während der Bremsung eine Krafteinwirkung auf den Fahrer des Fahrzeugs (0) als beabsichtigte Verminderung eines Fahrerkomforts bewirkt (S4).

## Claims

1. Driver assistance system for supporting a driver of a vehicle (0) with automated vehicle guidance according to SAE Level 1 or 2 in a yield situation, wherein the driver assistance system comprises a sensor interface (1) which is designed to transmit sensor signals about the surroundings of the vehicle (0) to a control unit (3) of the driver assistance system, and wherein the control unit (3) is designed to decide, based on the sensor signals, whether a braking of the vehicle (0) triggered by the driver assistance system is necessary for observing a right of way of another road user, and to output, in case of a decision for braking, a command for performing a braking of the vehicle (0) via an actuator interface (5) of the driver assistance system, **characterized in that** a feedback unit of the driver assistance system is designed to effect, during the braking, a force action on the driver of the vehicle (0) as an intended reduction of a driver comfort.

2. Driver assistance system according to claim 1,
wherein the feedback unit is designed to control, for generating the force action, a belt tensioner of the vehicle (0) for uncomfortably tightening a seat belt of the driver.

3. Driver assistance system according to one of the preceding claims,
wherein the feedback unit is designed to set, for generating the force action, a time profile of an intensity of the braking with a predetermined time pattern in order to generate a deliberately uncomfortable braking.

4. Driver assistance system according to claim 3,
wherein the time profile of the intensity of the braking is determined by a predetermined time profile of respectively a target braking torque, a target vehicle deceleration or a time derivative of the target vehicle deceleration, which are respectively predetermined according to a time pattern determined as uncomfortable.

5. Driver assistance system according to claim 4,
wherein the time profile of the intensity of the braking comprises at least two peaks in the time derivative of the target vehicle deceleration.

6. Driver assistance system according to one of claims 4 to 5,
wherein the time profile of the intensity of the braking comprises a target vehicle deceleration or a target braking torque above a predetermined threshold value in order to execute an uncomfortably strong braking.

7. Driver assistance system according to one of claims 4 to 6,
wherein the time profile of the intensity of the braking comprises, at the beginning or at the end of the braking, a time derivative of the target vehicle deceleration above a predetermined threshold value, in particular a maximum possible time derivative of the target vehicle deceleration at the vehicle (0).

8. Driver assistance system according to one of the preceding claims,
wherein the control unit (3) is designed to cumulate the number of brakings triggered by the driver assistance system to a total value, and to block, upon exceeding the total value above a predetermined limit, a future triggering of the braking by the driver assistance system in a yield situation.

9. Driver assistance system according to one of the preceding claims,
comprising a monitoring unit which is designed to execute a monitoring of the braking behavior, and to output, in the case of a number of deviations between a target variable and an actual variable related to the braking above a predetermined limit condition, a warning signal.

10. Method for supporting a driver of a vehicle (0) in a yield situation during a vehicle guidance with SAE Level 1 or 2, wherein sensor signals about the surroundings of the vehicle (0) are transmitted (S1) from a sensor interface (1) of the driver assistance system to a control unit (3) of the driver assistance system, and wherein the control unit (3) decides (S2), based on the sensor signals, whether a braking of the vehicle (0) triggered by the driver assistance system is necessary for observing a right of way of another road user, and outputs (S3), in case of a decision for braking, a command for performing a braking of the vehicle (0) via an actuator interface (5) of the driver assistance system, **characterized in that** a feedback unit of the driver assistance system effects (S4), during the braking, a force action on the driver of the vehicle (0) as an intended reduction of a driver comfort.

## Revendications

1. Système d'assistance au conducteur pour assister un conducteur d'un véhicule (0) avec guidage automatisé du véhicule selon SAE Level 1 ou 2 dans une situation de céder le passage, le système d'assistance au conducteur comprenant une interface de capteur (1) qui est conçue pour transmettre des signaux de capteur concernant l'environnement du véhicule (0) à une unité de commande (3) du système d'assistance au conducteur, et l'unité de commande (3) étant conçue pour décider, sur la base des signaux de capteur, si un freinage du véhicule (0) déclenché par le système d'assistance au conducteur est nécessaire pour respecter un droit de priorité d'un autre usager de la route, et pour émettre, en présence d'une décision de freinage, une commande pour effectuer un freinage du véhicule (0) via une interface d'actionneur (5) du système d'assistance au conducteur, **caractérisé en ce qu'**une unité de retour d'information du système d'assistance au conducteur est conçue pour provoquer, pendant le freinage, une action de force sur le conducteur du véhicule (0) en tant que réduction intentionnelle d'un confort du conducteur.

2. Système d'assistance au conducteur selon la revendication 1,
dans lequel l'unité de retour d'information est conçue pour commander, pour générer l'action de force, un tendeur de ceinture du véhicule (0) pour serrer de manière inconfortable une ceinture de sécurité du conducteur.

3. Système d'assistance au conducteur selon l'une des revendications précédentes,
dans lequel l'unité de retour d'information est conçue pour régler, pour générer l'action de force, un profil temporel d'une intensité du freinage avec un motif temporel prédéterminé afin de générer un freinage délibérément inconfortable.

4. Système d'assistance au conducteur selon la revendication 3,
dans lequel le profil temporel de l'intensité du freinage est déterminé par un profil temporel prédéterminé respectivement d'un couple de freinage cible, d'une décélération cible du véhicule ou d'une dérivée temporelle de la décélération cible du véhicule, qui sont respectivement prédéterminés selon un motif temporel déterminé comme inconfortable.

5. Système d'assistance au conducteur selon la revendication 4,
dans lequel le profil temporel de l'intensité du freinage comporte au moins deux pics dans la dérivée temporelle de la décélération cible du véhicule.

6. Système d'assistance au conducteur selon l'une des revendications 4 à 5,
dans lequel le profil temporel de l'intensité du freinage comporte une décélération cible du véhicule ou un couple de freinage cible au-dessus d'une valeur seuil prédéterminée afin d'exécuter un freinage inconfortablement fort.

7. Système d'assistance au conducteur selon l'une des revendications 4 à 6,
dans lequel le profil temporel de l'intensité du freinage comporte, au début ou à la fin du freinage, une dérivée temporelle de la décélération cible du véhicule au-dessus d'une valeur seuil prédéterminée, en particulier une dérivée temporelle maximale possible de la décélération cible du véhicule au véhicule (0).

8. Système d'assistance au conducteur selon l'une des revendications précédentes,
dans lequel l'unité de commande (3) est conçue pour cumuler le nombre de freinages déclenchés par le système d'assistance au conducteur en une valeur totale, et pour bloquer, lors du dépassement de la valeur totale au-dessus d'une limite prédéterminée, un déclenchement futur du freinage par le système d'assistance au conducteur dans une situation de céder le passage.

9. Système d'assistance au conducteur selon l'une des revendications précédentes, comprenant une unité de surveillance qui est conçue pour exécuter une surveillance du comportement de freinage, et pour émettre, dans le cas d'un nombre de déviations entre une grandeur cible et une grandeur réelle relative au freinage au-dessus d'une condition limite prédéterminée, un signal d'avertissement.

10. Procédé pour assister un conducteur d'un véhicule (0) dans une situation de céder le passage pendant un guidage du véhicule avec SAE Level 1 ou 2, dans lequel des signaux de capteur concernant l'environnement du véhicule (0) sont transmis (S1) d'une interface de capteur (1) du système d'assistance au conducteur à une unité de commande (3) du système d'assistance au conducteur, et dans lequel l'unité de commande (3) décide (S2), sur la base des signaux de capteur, si un freinage du véhicule (0) déclenché par le système d'assistance au conducteur est nécessaire pour respecter un droit de priorité d'un autre usager de la route, et émet (S3), en présence d'une décision de freinage, une commande pour effectuer un freinage du véhicule (0) via une interface d'actionneur (5) du système d'assistance au conducteur, **caractérisé en ce qu'**une unité de retour d'information du système d'assistance au conducteur provoque (S4), pendant le freinage, une action de force sur le conducteur du véhicule (0) en tant que réduction intentionnelle d'un confort du conducteur.
